**Europäisches Patentamt**

(19) **European Patent Office**

**Office européen des brevets**

(11) Publication number: **0 375 140 A2**

(12) # EUROPEAN PATENT APPLICATION

(21) Application number: **89311675.6**

(51) Int. Cl.5: **G06F 15/21**

(22) Date of filing: **10.11.89**

(30) Priority: **21.12.88 US 290014**

(43) Date of publication of application:
**27.06.90 Bulletin 90/26**

(84) Designated Contracting States:
**DE FR GB IT**

(71) Applicant: **International Business Machines Corporation**
**Old Orchard Road**
**Armonk, N.Y. 10504(US)**

(72) Inventor: **MacPhail, Margaret Gardner**
**2105 Tower Drive**
**Austin Texas 78703(US)**

(74) Representative: **Grant, Iain Murray**
**IBM United Kingdom Limited Intellectual Property Department Hursley Park**
**Winchester Hampshire SO21 2JN(GB)**

(54) **Document marking.**

(57) The marking of at least one selected section of a document with action markers by a requesting end user is disclosed. The requesting end user specifies an action to be performed by a responding end user. A data area, which includes the specified action, the identity of the responding end user and a due date, is embedded into a text data section of the document. After the document has been marked, the document is filed and/or transmitted to the responding end user for review. Alternatively, instead of transmitting the document to the responding end user, access to the document filed in a library associated with the requesting end user may be granted to the responding end user. Upon either receipt of the marked document or having access to the document, the responding end user may view all actions to be performed which are associated with a selected one of the action markers.

FIG. 1

# DOCUMENT MARKING

This invention relates to document marking in electronic data processing systems and provides a method of marking a document and specifying actions to be taken by another end user in reviewing the document.

The use of personal computers has increased both in the home and in business. In recent times, the growth of personal computers in business has been explosive. A great majority of workers now use terminals to perform their respective jobs. Moreover, the exchange of information between employees within office or within offices remotely connected has become commonplace through the use of networks. Faster, larger and more reliable networking and distribution systems are being developed. The use of networks have reduced the cost associated with expensive I/O devices such as large DASD devices by making these devices available to all of the users throughout a network. Although networks have coupled users together, new applications are still needed which focus on making tasks performed by a group of users more productive.

The present invention provides, in an information processing system, a method of marking a document for action, the method includes the steps of:

causing the system to assign an identifier for an action to be performed on the document;

inserting a plurality of action markers within the document; and

entering data into a data area associated with the plurality of action markers whereby the action to be performed is specified and an end user to perform the action on the document is identified.

There is disclosed hereinafter an example of such an arrangement which provides a method of marking a document and specifying actions to be taken by another end user in reviewing the document. A requesting end user, subsequent to selecting a document, invokes a mark-up program. The requesting end user specifies at least one begin action marker and an associated end action marker, at least one responding end user, and a due date / the action to be performed / status associated with the action markers / notification criteria. The document, as marked, is then either filed in a library with access to the document given to the at least one responding end user or transmitted to the at least one responding end user for review / action thereby.

The present invention will be described further by way of example with reference to an embodiment thereof as illustrated in the accompanying drawings, in which:

Fig. 1 is a block diagram of a document management system;

Fig. 2 is an example of a document showing the various objects associated with the document stored in the system of Fig. 1.

Figs. 3 through 8 show data areas and functions which may be associated with a selected action marker;

Fig. 9 is a flow diagrams illustrating details of the operation thereof;

Figs. 10 and 11 illustrate typical constructs;

Figs. 12 and 13 are flow diagrams illustrating detailed steps of a view and an update operation, respectively; and

Figs 14a and 14b provide a flow diagram of a notify operation.

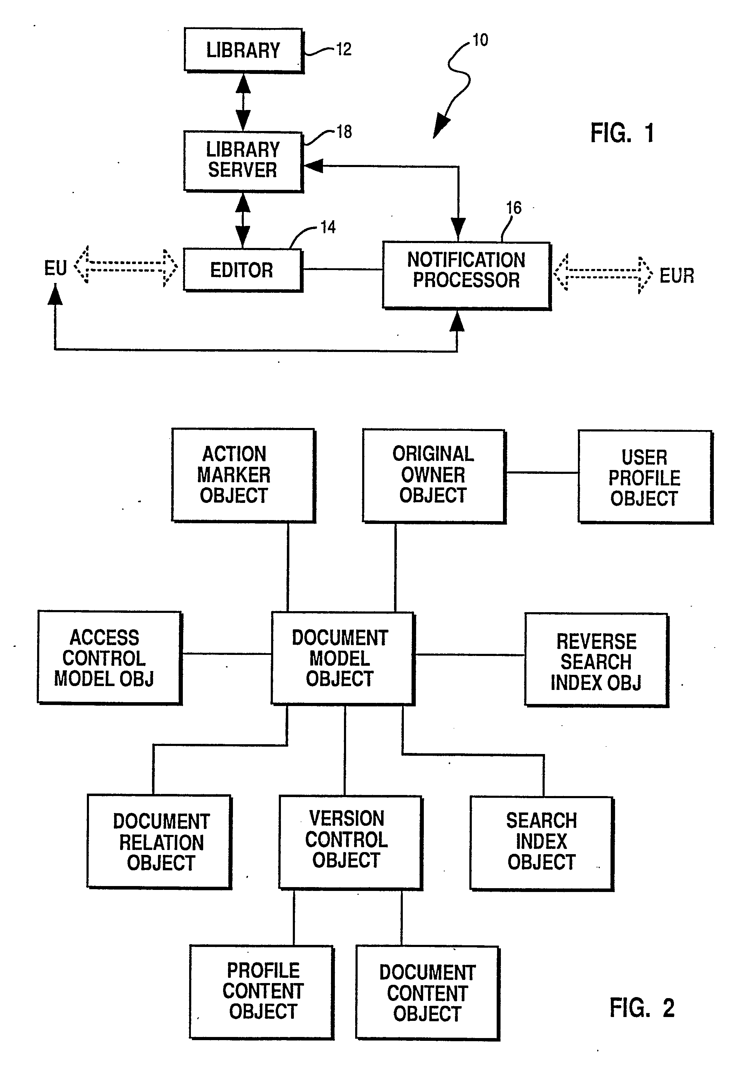

Fig. 1 shows a document management system 10 which controls the creation, retrieval, editing and distribution of documents within an information processing system (not shown). Documents which are created by an end user (EU) are stored in a library 12. The library 12 performs various services for the system 10. These services are used for storing and retrieving documents electronically. Whenever a document is filed in the library 12, a set of descriptors called a document profile is filed with it. The document profile contains descriptors such as a name under which the document is filed, author/owner of the document, the subject of the document and the date the document was filed in the library. Document profiles facilitates the searching for documents in filed in the library 12.

The library 12 also provides the following services:

deleting documents from the library;

updating work in progress documents in the library;

specifying a security level to be associated with the document which is being filed;

allowing authorised end users other than the author/owner to retrieve a document from the library; and

performing searches for and retrieving documents filed in the library for other end users.

The EU may retrieve documents, which were previously stored in the library 12, for editing and/or distribution by interacting with a text editor 14. The text editor 14 in the preferred embodiment of the present invention supports a uniform data stream for documents created, stored and edited thereby. The uniform datastream, which is supported by text editor 14 and which is well known in the art, is document content architecture. Text editors supporting document content architecture either support a final form text format or revisable form text format. The text editor 14, in the preferred embodiment, supports the revisable form text format. Since the details of text editors, which support the revisable form text format are well known in the art, they will not explained further herein.

After retrieving a document from the library 12 or creating a new document, the EU may mark at least one selected portion thereof and specify an action to be subsequently performed by another end user. The EU accomplished this by invoking an action marker function which available through the editor 14. Additionally, the EU may invoke a function to notify a responding end user (EUR) to perform the specified action. The notify function either may be performed within the text editor 14 or through the use of a notify processor 16 which is external to the text editor. The EU interacts with the notify processor 16 to select an existing message or to generate a new message to be transmitted to the EUR. Moreover, the EU may indicate whether a copy of the document, as marked, and any related documents are to be transmitted to the EUR. Alternately, instead of transmitting the document, as marked, and any related documents to the EUR, the EU may chose to give access to the EUR to a copy of the document filed in the library 12. If the document, as marked, and any related documents are to be transmitted to the EUR, the notify processor 16 interacts with library server 18 to retrieve the documents from the library 12. Thereafter, the notify processor 16 transmits the selected or generated message and the retrieved documents to the EUR. It should be understood that the EUR may be within the same system or remotely coupled to the EU by a network (not shown).

Referring to Fig. 2, each document filed in the library 12 includes the objects shown therein. All of the objects shown in Fig. 2 are created in response to processing a FILE command.

A document object contains information concerning ownership and attributes of a specific document. This object controls the access to the document during its life in the library 12.

An original owner object contains or points to information used by an owner of the document to control access to the document as filed.

A document content object provides for the storage of the document content and for saving information relating to the actual size of the filed document.

A document relation object describes the logical relationship between the document and other documents. If the document is a folder document, each of the documents contained therein has a pointer or library assigned document name (LADN) entry in this object. If this document is in one or more folder documents, then each folder document has a pointer or LADN entry in this object. Enter and remove history may be maintained for the document as a folder document or as a document in other folders.

An access control model object is created when the document owner authorises other users to access the document.

An action marker model object provides for constructs for the beginning and the end of portions marked in a document. This object also provides for data area there an end user may specify the responding end user, due date, action to be performed, notification, status request and specification of any related documents.

Structures for all of the above-identified objects are a part of a DISOSS office system marketed by International Business Machines Corporation and will not be described herein.

Referring again to Fig. 1, the editor 14 includes a plurality of functions associated with action markers. The action marker functions may be displayed to the requesting EU on a display unit (not shown) included in document management system 10. Further, the action marker functions may be displayed as items on an action bar on the display unit or as items on a pop-up menu. The action marker functions may be selected by using a pointing device, a keyboard or a touch sensitive screen included as a part of the document management system 10. Alternately, each of the action marker functions may be associated with a selected one of a plurality of function keys on the keyboard. A selected one of the action marker functions facilitates the invocation of an action marker application program.

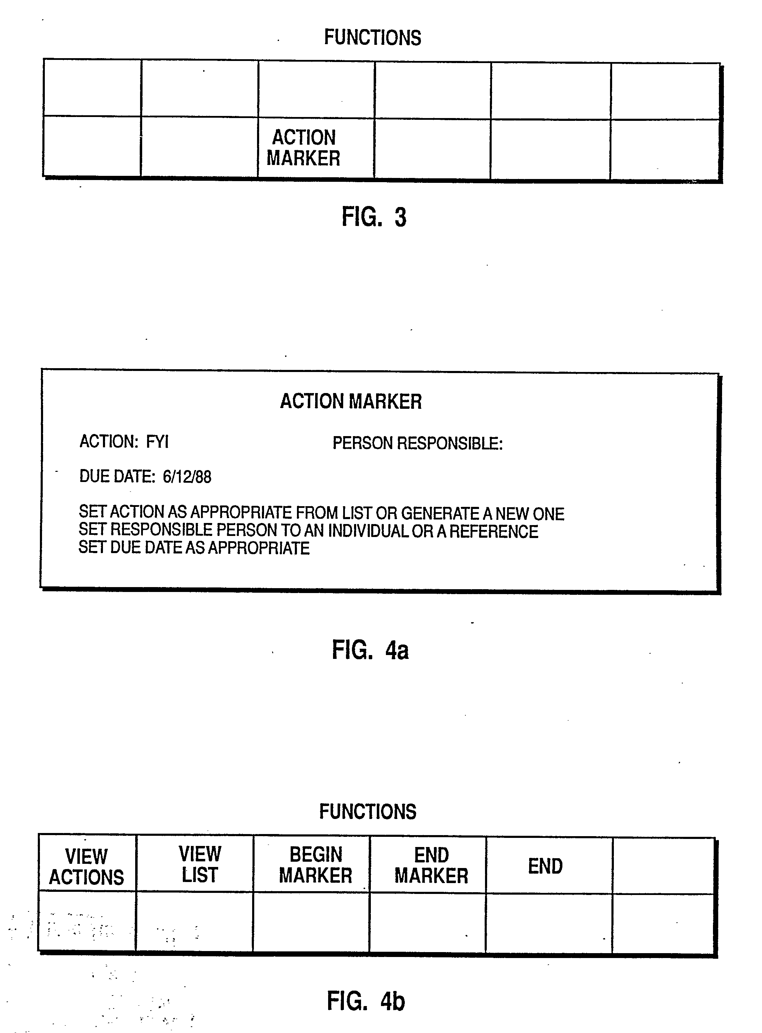

The disclosed arrangment enables a requesting end user (EU) to mark-up a selected document and specify an action to be taken by the responding end user (EUR). The requesting EU, interacting with the editor 14 (Fig. 1), activates a action marker function as shown in Fig. 3 to mark a section of the selected document. The document management system 10 then displays in Figs. 4a and 4b an action marker data and additional action marker functions, respectively, to the requesting EU. The requesting EU, subsequent to having positioned a cursor associated with the display unit at a beginning of a section to be marked, then selects a begin marker function. Thereafter, the cursor is then moved to an end of the section being marked and a end marker function is selected. The editor 14 displays a begin action marker icon or symbol, such as "≫" at the beginning of the section and a end action marker icon or symbol, such as "≪" at the end of the section. The beginning and end action marker icons may be any of a plurality of fancy icons or symbols which are recognisable by all users of the document management system 10. Alternately, a section of a document may be marked by underlining the section to be reviewed, causing the section to appear in bold type, changing the fonts for the section and/or highlighting the section including the use of reverse video. Additionally, the requesting EU enters the action to be performed, the responding end user to perform the action, and the date which the action must be completed in the action marker data area shown in Fig. 4a if other than a default due date. The requesting EU then files the document as marked into the library 12 and/or transmits the document, as marked, to the EUR. In either case, the EU sends a message to the EUR setting forth some action to be taken on the document. If the EU filed the document in the library 12, the EUR must be given access to the document stored therein.

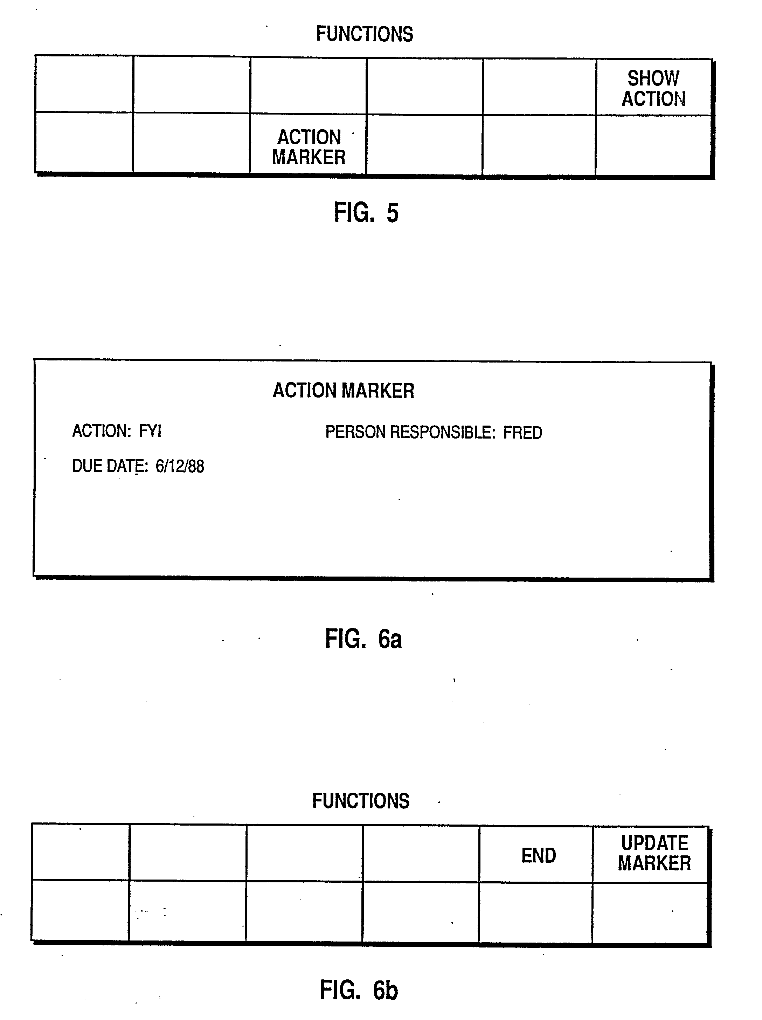

The requesting EU may desire to review an action associated with a selected action marker in the document. The requesting EU activates a show action function shown in Fig. 5. The document management system 10 then displays an action marker data area shown in Fig. 6a and additional action marker functions shown in Fig. 6b. The requesting EU may either change or update the data displayed in the action marker data area or terminate the review of the selected action marker.

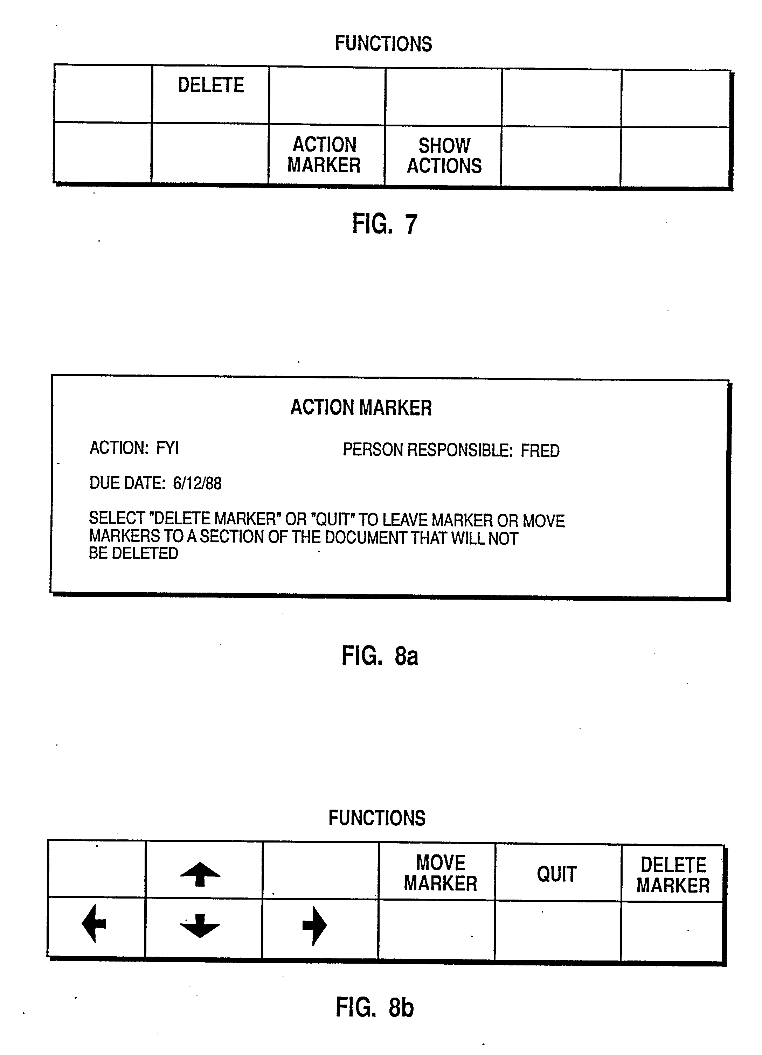

In addition to changing or updating the data associated with the action marker data area shown in Fig. 6a, the requesting EU may elect to delete or move a selected action marker. If the requesting EU elects to delete the selected action marker, a delete function, shown in Fig. 7 is activated. The document management system 10 then displays an action marker data area and additional action marker functions shown in Figs. 8a and 8b, respectively. Upon the activation of the delete function, the document management system 10 displays a message in the action marker data area instructing the requesting EU to either confirm the action of the delete function, leave the delete function or to activate a move marker function to move the action marker to another location in the selected document. The requesting EU completes the review of the selected document by selecting one of the action marker functions shown in Fig. 8a. Thereafter, the document can either be further edited or filed within system 10 and optionally transmitted to an EUR.

Set out below is an example of one form of mark-up application program that can be invoked by a user of the document management system 10 to mark a document and specify actions to be performed by an identified responsible end user within an information processing system. The program is in program design language from which both source code and machine code are derivable.

```
BEGIN MARK-UP PROC

    INPUT
            POSITION CURSOR AT BEGINNING OF A
            SELECTED SECTION OF THE DOCUMENT TO BE
            MARKED.
            SPECIFY ACTION MARKER DATA WHICH INCLUDES:
                ACTION TO BE PERFORMED;
                ID OF USER RESPONSIBLE TO PERFORM
                ACTION;
                DUE DATE, IF OTHER THAN DEFAULT;
            POSITION CURSOR AT END OF THE SELECTED
            SECTION OF THE DOCUMENT BEING MARKED.
    PROCESS
            ASSIGN A UNIQUE ACTION ID FOR THIS ACTION
            MARKER.
            CREATE A BEGIN ACTION MARKER CONSTRUCT FOR
            THIS ACTION.
            DISPLAY BEGIN ACTION MARKER SYMBOL AT
            POSITION OF CURSOR.
            SET DEFAULT DUE DATE.
            GET ACTION MARKER DATA FROM USER.
            CREATE END ACTION MARKER CONSTRUCT FOR THIS
            ACTION.
            DISPLAY END ACTION MARKER SYMBOL AT POSITION
            OF CURSOR.
            CREATE AN ENTRY IN THE ACTION MARKER DATA

            AREA ASSOCIATED WITH THIS ACTION MARKER.
            SET THE ACTION ID, ACTION, USER RESPONSIBLE,
            DUE DATE, BEGIN MARKER LOCATION, AND END
            MARKER LOCATION IN THE ACTION MARKER DATA
            AREA.


    END MARK-UP PROC
```

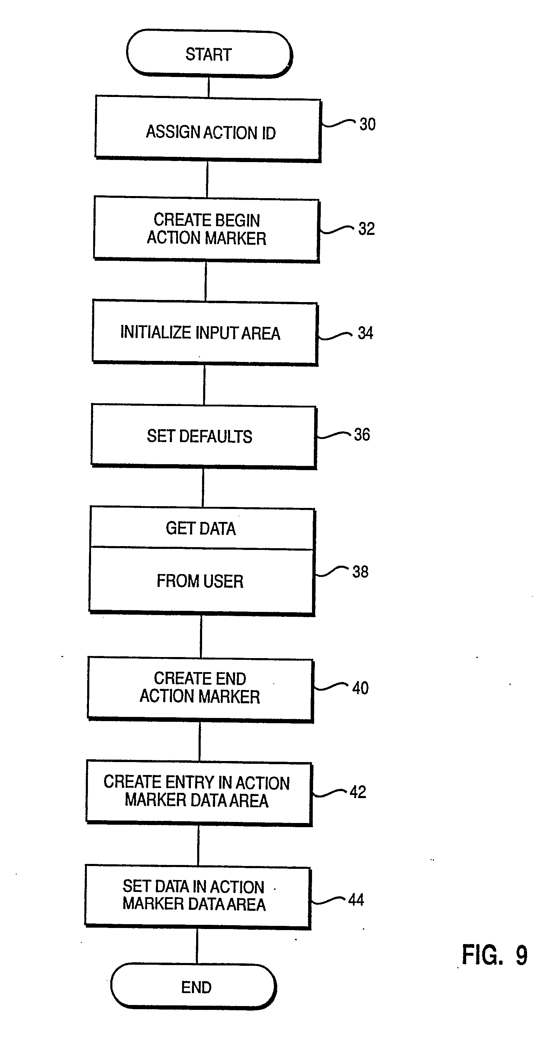

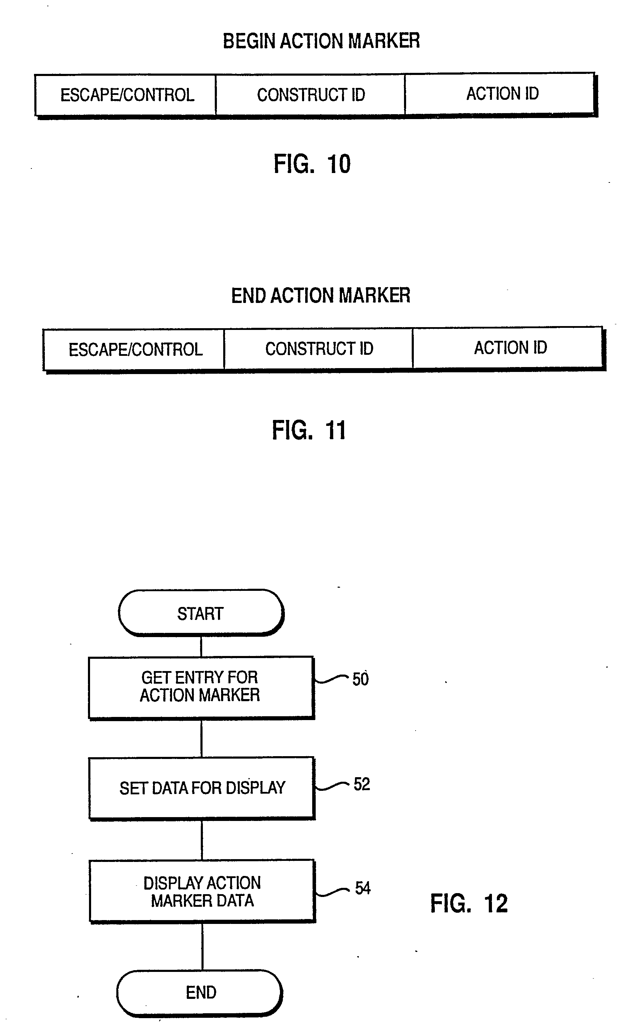

Referring to Fig. 9, there is shown a flow diagram of a document marking operation. Subsequent to the invocation of the mark-up application program, each action to be performed in association with the selected document has an unique action identifier or ID assigned thereto in step 30. This identifier is also used to

5

couple the begin action marker to the end action marker. In step 32, a begin action marker construct (Fig. 10) is generated in the data associated with the selected document and corresponds to the present position of the cursor within the document. The begin action marker construct also includes a construct ID which is an identifier for the begin action marker. In step 34, an action marker display data area, to be associated with the action marker, is initialised. The action marker display data area may be a pop-up window, a menu or any other input mechanism. The document management system 10 then sets the default due date in the action marker display data area. The requesting EU may, if desired, override the default due date. The document management system 10 then displays the action marker data area and any additional action marker functions to the requesting EU for the entry of data in the display data area and the activation of the additional action marker functions. In step 40, an end marker construct (Fig. 11) is generated in the selected document in response to the activation of the end action marker function. The end marker construct is built in the text data associated with the document and corresponds to the current position of the cursor. Moreover, the end marker construct includes the same unique identifier or action ID associated with the begin action marker and a construct ID which identifies the end action marker. An entry is created into the action marker data area in the document model object in step 42 and the data, which was entered by the requesting EU in step 38, is then entered into the action marker data area in the document model object in step 44.

Set out below is an illustration of an update action application program that can be invoked by a user of the document management system 10 to update the action marker data area associated with an action marker of the document. The program is in program design language from which both source code and machine code are derivable.

```
BEGIN UPDATE ACTION PROC

        INPUT

            MOVE CURSOR TO A SELECTED BEGIN OR END

            ACTION MARKER WITHIN DOCUMENT.

        PROCESS

            GET AND SAVE THE ENTRY ASSOCIATED WITH THIS

            ACTION MARKER.

            SET THE ACTION, PERSON RESPONSIBLE, DUE

            DATE, COMPLETION DATA, NOTIFICATION

            CRITERIA, NOTIFICATION ID AND CURRENT STATUS

            FOR DISPLAY TO REQUESTER.

            DISPLAY DATA TO REQUESTER.

            UPDATE THE ENTRY AS SPECIFIED.

            IF THE STATUS IS CHANGED AND THE NEW STATUS

                EQUALS THE NOTIFICATION STATUS AND

                REQUESTER WANTS NOTIFICATION, THEN

                    SEND A NOTIFICATION MESSAGE TO THE ID

                    TO BE NOTIFIED.

            ENDIF


END UPDATE ACTION PROC
```

As noted above, each action to be specified in the document, as marked, is associated with an unique identifier. The identifier is used to couple an action marker entry in an action marker table (not shown) stored in the document management system and the begin and end action markers. Either the begin action marker or the end action marker can be used to access the entry for this action. The document management system 10 determines which action marker has been selected by determining the current position of the cursor. The action marker data area associated with the selected action marker is then retrieved from storage and displayed to the requesting EU. The requesting EU enters data to update that which is currently displayed in the action marker data area. The process determines whether the notification criteria has been met. In essence, the determination is whether (1) the status has been changed and if the new status equals the notification status and (2) whether the requesting EU wanted notification. If the requesting EU notification and the new status equals the notification status, a message is generated and transmitted to the requesting EU.

Set out below is an example of one form of view action application program that can be invoked by a user of the document management system 10 to view an action associated with a selected one of the action markers set forth in a document stored within the information processing system. The program is in program design language from which both source code and machine code are derivable.

```
BEGIN VIEW ACTION PROC


    INPUT

        MOVE CURSOR TO A SELECTED BEGIN OR END

        ACTION MARKER WITHIN DOCUMENT.

    PROCESS

        GET ENTRY ASSOCIATED WITH THIS ACTION

        MARKER.

        SET ACTION, USER RESPONSIBLE, DUE DATE, AND



        COMPLETION DATE FOR PRESENTATION TO

        REQUESTER USER.

        DISPLAY DATA TO REQUESTER USER.


END VIEW ACTION PROC
```

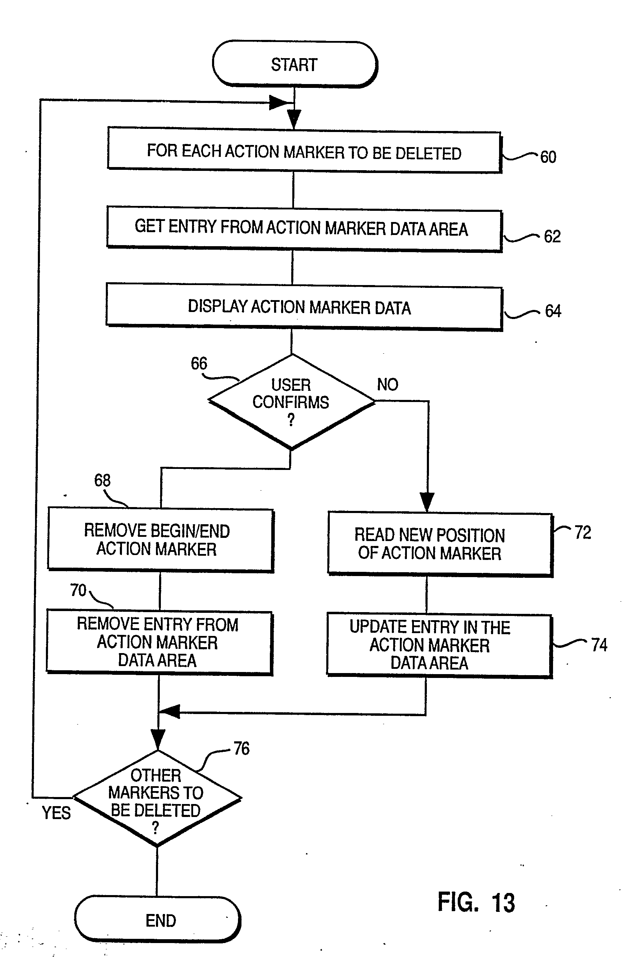

Referring to Fig. 12, there is shown a flow diagram of the view action application program. As noted above, each action to be specified in the document, as marked, is associated with an unique identifier. The identifier is used to couple an action marker entry in an action marker table (not shown) stored in the document management system 10 and the begin and end action markers. Either the begin action marker or the end action marker can be used to view an action associated therewith. In step 50, the document management system 10 determines which action marker has been selected for review by determining the current position of the cursor. The action marker data area associated with the selected action marker is then retrieved from storage within system 10 in step 52 and is displayed to the requesting EU in step 54. It should be noted that any authorised EU may use the view action function to review the action marker data area associated with a selected action marker.

Set out below is an an example of one form of a delete action application program that can be invoked by a user of the document management system 10 to remove or move an action associated with a selected beginning or an end action marker. The program is in program design language from which both source code and machine code are derivable.

7

```
BEGIN DELETE ACTION PROC

        INPUT


            SELECT ACTION MARKER TO BE DELETED.
            CONFIRM DELETE ACTION REQUEST.
        PROCESS
            FOR EACH ACTION MARKER TO BE DELETED WITH
                THIS REQUEST:
                    GET AN ENTRY ASSOCIATED WITH THE ACTION MARKER.
                    DISPLAY DATA TO REQUESTER USER AND
                    REQUEST CONFIRMATION OF DELETE ACTION.
                    IF THE REQUESTER USER CONFIRMS DELETION
                        THEN
                            REMOVE ACTION MARKER
                            REMOVE ENTRY FOR THIS ACTION
                            MARKER
                        ELSE
                            READ NEW POSITION OF ACTION MARKER
                            UPDATE THE ACTION MARKER LOCATION
                            IN THE DATA AREA FOR THIS
                            DOCUMENT.
                    ENDIF
            ENDFOR


    END DELETE ACTION PROC
```

Referring to Fig. 13, there is shown a flow diagram of this delete action application program. In view of the coupling between the begin action marker and the end action marker, either action marker may be used to delete an action associated therewith. In steps 60 and 62, the document management system 10 determines which of the action markers set forth in the selected document has been selected by the EU. Thereafter, the action marker data area associated with the selected action marker is displayed to the EU in step 64. Step 66 determines whether the EU desires to delete or move the selected action marker. If the selected action marker is to be deleted, the action marker is deleted in step 68 and the entry to the action marker data area is removed. Otherwise, the EU activates the move function and a new position of the action marker is read to facilitate the updating of action marker data area in steps 72 and 74. Step 76 determines whether there are other action markers to be either deleted or moved. If there are other action marker remaining to the deleted or moved, control is transferred to step 60.

Set out below is an example of one form of notify user application program that can be invoked by a user of the document management system 10 to inform a responding end user of an action to be performed on a marked document and to file and/or transmit the document to the responding end user. The program is in program design language from which both source code and machine code are derivable.

```
BEGIN NOTIFY PROC

        INPUT
                FILE OR SAVE A MARKED DOCUMENT IN LIBRARY
                USING A NOTIFY ACTION MARKER REQUEST OR
                ACTIVATE NOTIFY PROCESS SUBSEQUENT TO
                DOCUMENT BEING FILED.
        PROCESS
                CREATE A TEMPORARY RECIPIENT TABLE (TRT)
                DO FOR EACH ACTION MARKER IN THE DOCUMENT
                   FOR THIS RESPONDING END USER (EUR)
                      IF THIS IS A FIRST MARKER IN THE
                         DOCUMENT FOR THIS EUR, THEN
                            CREATE AN ENTRY FOR THIS EUR IN
                            THE TRT
                      ENDIF
                      PRESENT A DEFAULT MESSAGE AND COMMAND
                      SPECIFICATIONS
                      GET THE MESSAGE AND THE COMMAND
```

```
                SPECIFICATIONS

                DO FOR EACH DOCUMENT ASSOCIATED WITH

                    MARKER

                        IF THE DOCUMENT DOES NOT APPEAR IN

                            THE CURRENT EUR's TRT ENTRY THEN

                                COPY THE DOCUMENT'S UNIQUE ID

                                FROM THE ACTION MARKER MODEL

                                OBJECT

                        ENDIF

                        SET THE ACCESS OR SEND FLAG FOR

                        THIS DOCUMENT

                ENDDO

                    PUT A POINTER TO THE MESSAGE IN THE

                    EUR's TRT ENTRY

            ENDDO

            DO FOR EACH ENTRY IN THE TRT

                PACKAGE THE MESSAGE TOGETHER

                DO FOR EACH DOCUMENT IN THE ENTRY

                    IF THE DOCUMENT IS TO BE SENT THEN

                        GET A COPY OF THE DOCUMENT

                    ELSE

                        GIVE THE EUR ACCESS TO THE

                        DOCUMENT

                    ENDIF

                ENDDO

                DISTRIBUTE THE MESSAGE(S) AND

                DOCUMENT(S) TO THE EUR(S)

            ENDDO


        END NOTIFY PROC
```

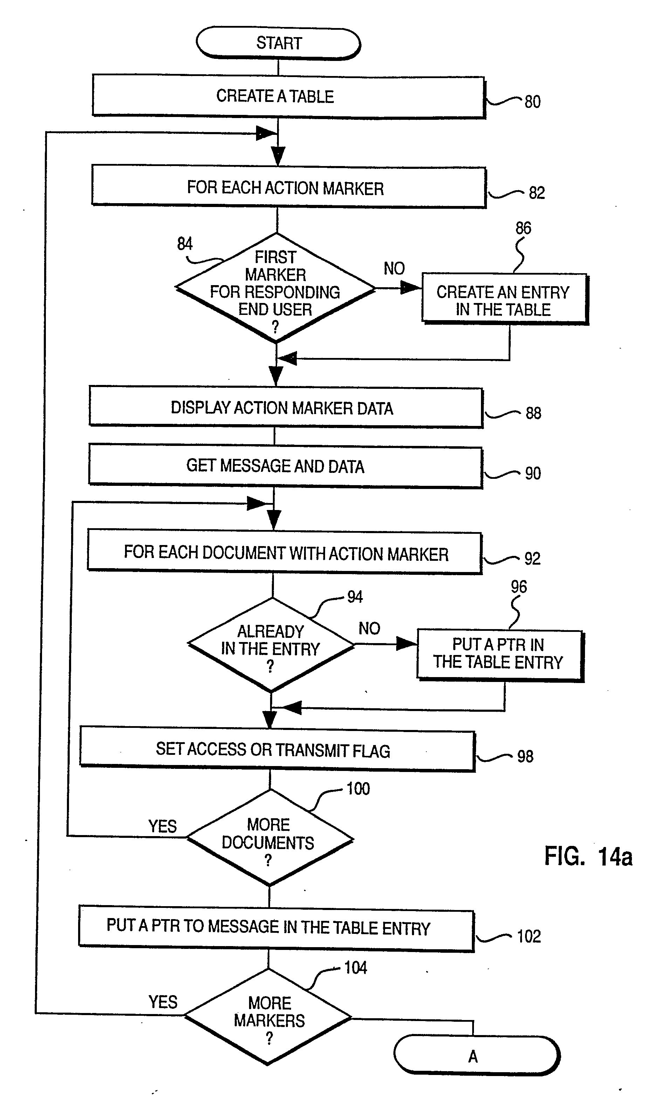

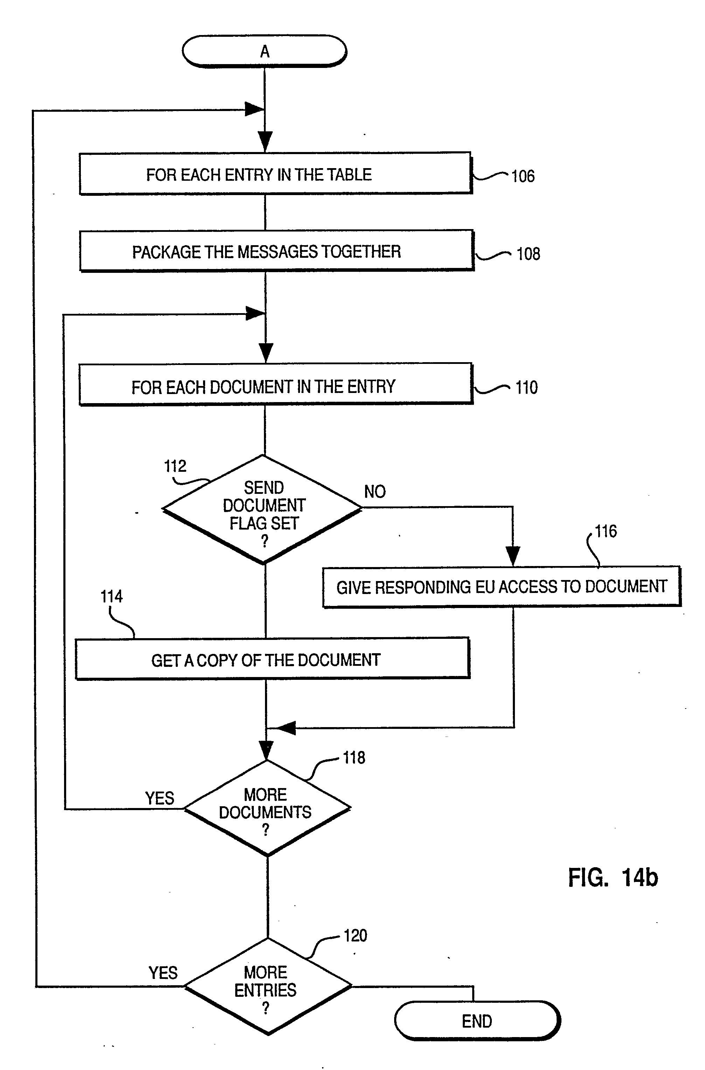

Referring to Figs. 14a and 14b, there is shown a flow diagram for this notify application program. A particular EUR may be the recipient of more than one action marker. In step 80, a temporary recipient table (TRT) is generated to keep track of the documents and messages associated with a particular EUR. In steps 82 and 84, each entry in an action marker object will be processed. Each entry contains the EUR and the documents to be associated therewith. In step 86, if an action marker is the first marker for an EUR, an entry is created in the TRT for the EUR. In step 88, the action marker data is displayed to the requesting EU along with a default message and a default send or access specification for each of the documents. The document containing the action marker is always displayed. If a document appears more than once for a given EUR, then the default send or access specification is the one last specified by the requesting EU for that document. In step 90, a dialogue manager interacts with the requesting EU to get a final message and send or access specifications for each document. In steps 92, 94 and 96, for each document associated with the action marker, an entry is made in the EUR's TRT for each document which is not currently included therein. An unique identifier associated with each of the document not included therein is entered into the EUR's TRT. An access or a send flag is set in step 98 to facilitate the granting of access to the document or the transmission of the document to the EUR. The requesting EU specifies which flag is to be set for each document. Step 100 determines whether there are other documents to be processed. If there are other documents to be process, control is transferred to step 92. Step 102 places a pointer to the message in the EUR's TRT entry. Step 104 determines whether there are other action markers to be processed. If there are other action markers to be processed, control is transferred to step 82. In steps 106 and 108, all messages for a given EUR are packaged together for transmission thereto. In steps 110 and 112, a determination is made as to whether a document's send flag is set. If the document send flag is set, a copy of the document is retrieved for transmission to the EUR in step 114. All of the messages and the documents for a given EUR are transmitted thereto simultaneously. Otherwise, the EUR is granted access to the document in step 116. Step 118 determines whether there are other documents to be processed. If there are other documents to be processed, control is transferred to step 110. Step 120 determines whether there are other entries in the EUR's table to be processed. If there are other entries to be processed, control is transferred to step 106.

In summary, the requesting EU marks a section of a document to be reviewed by a responding EU. The action to be performed, the responding EU and the due date, which are specified by the requesting EU, becomes a part of the document and are associated with a begin action marker and an end action marker. Multiple sections can be marked for review by the same responding EU or other responding EUs. After the document has been marked, the document is filed and/or the responding EU or EUs may be given access to the document to complete the review thereof. Alternately, after the filing of the document, the document may be transmitted to the responding EU or EUs for review. CO-pending applications and (AT9-88-039 and AT9-88-040) relate to similar subject matter.

## Claims

1. In an information processing system, a method of marking a document for action, the method includes the steps of:
causing the system to assign an identifier for an action to be performed on the document;
inserting a plurality of action markers within the document; and
entering data into a data area associated with the plurality of action markers whereby the action to be performed is specified and an end user to perform the action on the document is identified.

2. A method as claimed in claim 1, further including selecting a portion of the document to be marked with the action markers.

3. A method as claimed in claim 2, wherein the inserting step includes the steps of:
indicating to the system where a begin action marker is to be inserted; and
indicating to the system where an end action marker is to be inserted.

4. A method as claimed in claim 3, further including displaying the data area to a requesting end user prior to the step of entering data therein.

5. A method as claimed in claim 4, wherein the displayed data area includes at least one default entry and further includes the step of overriding the at least one default entry with a new entry.

6. A method as claimed in any preceding claim, further including reviewing an action associated with one of the plurality of action markers.

7. A method as claimed in claim 6, wherein the reviewing step includes the steps of:
selecting one of the plurality of action markers in the document;
activating an show action function for the selected one of the plurality of action markers; and
displaying the data area associated with the selected one of the action markers.

8. A method as claimed in claim 7, further including activating a delete function whereby an action associated with the selected one of the plurality of action markers is deleted.

9. A method as claimed in claim 8, further including removing an entry associated with the deleted action from the data area.

10. A method as claimed in claim 7, further including moving the selected one of the plurality of action markers to a new position within the document.

11. A method as claimed in claim 10, further including updating the data area to reflect the new position associated with the selected one of the plurality of action markers.

12. A method as claimed in any preceding claim, further including determining whether the document as marked with the plurality of action markers and the data area is to be transmitted to an end user for review.

13. A method as claimed in claim 12, further including the steps of:

retrieving a copy of the document as marked from the system if the document is to transmitted to the end user; and

transmitting the copy of the document to the end user.

14. A method as claimed in claim 13, further including packaging messages associated with the end user and which is associated with the document together for transmission thereto.

15. A method as claimed in claim 14, wherein the transmitting step includes transmitting the document and the messages simultaneously to the end user.

16. A method as claimed in claim 12, further including granting access to the document to the end user if the document is not to be transmitted to the end user.

FIG. 1

FIG. 2

FUNCTIONS

| | | ACTION MARKER | | | |
|---|---|---|---|---|---|

FIG. 3

ACTION MARKER

ACTION: FYI                    PERSON RESPONSIBLE:

DUE DATE: 6/12/88

SET ACTION AS APPROPRIATE FROM LIST OR GENERATE A NEW ONE
SET RESPONSIBLE PERSON TO AN INDIVIDUAL OR A REFERENCE
SET DUE DATE AS APPROPRIATE

FIG. 4a

FUNCTIONS

| VIEW ACTIONS | VIEW LIST | BEGIN MARKER | END MARKER | END | |
|---|---|---|---|---|---|
| | | | | | |

FIG. 4b

FUNCTIONS

| | | | | | SHOW ACTION |
|---|---|---|---|---|---|
| | | ACTION MARKER | | | |

FIG. 5

---

ACTION MARKER

ACTION: FYI                    PERSON RESPONSIBLE: FRED

DUE DATE: 6/12/88

FIG. 6a

---

FUNCTIONS

| | | | | END | UPDATE MARKER |
|---|---|---|---|---|---|
| | | | | | |

FIG. 6b

FUNCTIONS

| | DELETE | | | | |
|---|---|---|---|---|---|
| | | ACTION MARKER | SHOW ACTIONS | | |

**FIG. 7**

---

**ACTION MARKER**

ACTION: FYI                    PERSON RESPONSIBLE: FRED

DUE DATE: 6/12/88

SELECT "DELETE MARKER" OR "QUIT" TO LEAVE MARKER OR MOVE
MARKERS TO A SECTION OF THE DOCUMENT THAT WILL NOT
BE DELETED

**FIG. 8a**

---

FUNCTIONS

| | ↑ | | MOVE MARKER | QUIT | DELETE MARKER |
|---|---|---|---|---|---|
| ← | ↓ | → | | | |

**FIG. 8b**

FIG. 9

START

ASSIGN ACTION ID — 30

CREATE BEGIN
ACTION MARKER — 32

INITIALIZE INPUT AREA — 34

SET DEFAULTS — 36

GET DATA

FROM USER — 38

CREATE END
ACTION MARKER — 40

CREATE ENTRY IN ACTION
MARKER DATA AREA — 42

SET DATA IN ACTION
MARKER DATA AREA — 44

END

BEGIN ACTION MARKER

| ESCAPE/CONTROL | CONSTRUCT ID | ACTION ID |
|---|---|---|

FIG. 10

END ACTION MARKER

| ESCAPE/CONTROL | CONSTRUCT ID | ACTION ID |
|---|---|---|

FIG. 11

```
        START

        ↓

GET ENTRY FOR        ~ 50
ACTION MARKER

        ↓

SET DATA FOR DISPLAY  ~ 52

        ↓

DISPLAY ACTION       ~ 54     FIG. 12
MARKER DATA

        ↓

        END
```

```
                    ┌──────────────┐
                    │    START     │
                    └──────┬───────┘
         ┌─────────────────▼──────────────────┐
         │ FOR EACH ACTION MARKER TO BE DELETED│──── 60
         └─────────────────┬──────────────────┘
         ┌─────────────────▼──────────────────┐
         │ GET ENTRY FROM ACTION MARKER DATA AREA│──── 62
         └─────────────────┬──────────────────┘
         ┌─────────────────▼──────────────────┐
         │    DISPLAY ACTION MARKER DATA       │──── 64
         └─────────────────┬──────────────────┘
                  66       ◇
                        ╱  USER  ╲     NO
                       ╱ CONFIRMS ╲──────────────┐
                       ╲    ?     ╱               │
                        ╲       ╱                 │
                           │ YES                  │
          68    ┌──────────▼──────────┐  ┌────────▼────────┐
                │  REMOVE BEGIN/END    │  │  READ NEW POSITION│── 72
                │   ACTION MARKER      │  │  OF ACTION MARKER │
                └──────────┬──────────┘  └────────┬────────┘
          70    ┌──────────▼──────────┐  ┌────────▼────────┐
                │ REMOVE ENTRY FROM    │  │ UPDATE ENTRY IN THE│── 74
                │  ACTION MARKER       │  │  ACTION MARKER    │
                │  DATA AREA           │  │  DATA AREA        │
                └──────────┬──────────┘  └────────┬────────┘
                           │◄─────────────────────┘
                        76 ◇
                        ╱ OTHER ╲
                YES    ╱ MARKERS TO╲
               ◄──────╲ BE DELETED ╱
                       ╲    ?     ╱
                           │
                    ┌──────▼───────┐
                    │     END      │
                    └──────────────┘
```

FIG. 13

START

CREATE A TABLE — 80

FOR EACH ACTION MARKER — 82

84 — FIRST MARKER FOR RESPONDING END USER ? — NO → CREATE AN ENTRY IN THE TABLE — 86

DISPLAY ACTION MARKER DATA — 88

GET MESSAGE AND DATA — 90

FOR EACH DOCUMENT WITH ACTION MARKER — 92

94 — ALREADY IN THE ENTRY ? — NO → PUT A PTR IN THE TABLE ENTRY — 96

SET ACCESS OR TRANSMIT FLAG — 98

100 — MORE DOCUMENTS ? — YES

PUT A PTR TO MESSAGE IN THE TABLE ENTRY — 102

104 — MORE MARKERS ? — YES

A

FIG. 14a

A

FOR EACH ENTRY IN THE TABLE — 106

PACKAGE THE MESSAGES TOGETHER — 108

FOR EACH DOCUMENT IN THE ENTRY — 110

112 — SEND DOCUMENT FLAG SET ? — NO

GIVE RESPONDING EU ACCESS TO DOCUMENT — 116

114 — GET A COPY OF THE DOCUMENT

118 — MORE DOCUMENTS ? — YES

120 — MORE ENTRIES ? — YES

END

FIG. 14b